# EUROPÄISCHE PATENTSCHRIFT

(11) **EP 3 088 888 B1**
(45) Veröffentlichungstag und Bekanntmachung des Hinweises auf die Patenterteilung: **30.10.2024**
(21) Anmeldenummer: 15001306.8
(22) Anmeldetag: 01.05.2015
(51) Int. Cl.: G01N 30/12, G01N 1/22, G01N 30/16, G01N 30/18

(54) **VORRICHTUNG ZUR EXTRAKTION EINER FLÜCHTIGEN KOMPONENTE**
DEVICE FOR THE EXTRACTION OF A VOLATILE COMPONENT
DISPOSITIF D'EXTRACTION D'UN COMPOSANT VOLATILE

(43) Veröffentlichungstag der Anmeldung: 02.11.2016
(73) Patentinhaber: CTC Analytics AG, 4222 Zwingen (CH)
(72) Erfinder: Cretnik, Stefan Anton, 4203 Grellingen (CH); Schüler, Kai Heinrich, 9114 Hoffeld (CH); Zumbach, Melchior, 5600 Lenzburg (CH)
(74) Vertreter: Keller Schneider Patent- und Markenanwälte AG

(56) Entgegenhaltungen:
- EP-A1- 2 518 489
- US-A- 4 864 877
- US-A- 5 932 482
- US-B1- 8 092 744

## Beschreibung

### Technisches Gebiet

Die Erfindung betrifft eine Vorrichtung zur Extraktion einer flüchtigen Komponente aus einer Probe, insbesondere einer Flüssigkeitsprobe.

### Stand der Technik

Im Stand der Technik sind unterschiedliche Vorrichtungen zur Extraktion von flüchtigen Komponenten, wie beispielsweise flüchtige organische Komponenten (volatile organic compound - VOC), aus einer Probe bekannt. Insbesondere ist es erwünscht, flüchtige Komponenten aus einer Probe in die Gasphase zu überführen und diese anschliessend zu sammeln, beispielsweise in einer Säule mit geeignetem Absorbermaterial.

Besonders auf dem Gebiet der Umweltanalytik werden derartige Extraktionsvorrichtungen zum Nachweis von Verunreinigungen in Wasser- oder Bodenproben verwendet. Dabei werden die extrahierten flüchtigen Komponenten in einer Trapsäule gesammelt und anschliessend durch Einwirkung von Hitze aus dieser verflüchtigt, wobei die flüchtigen Komponenten in ein Analysegerät, insbesondere einen Gaschromatographen überführt werden, wo diese aufgetrennt, identifiziert und auch quantifiziert werden können.

Auf diesem Gebiet hat sich insbesondere das sogenannte "purge and trap" Verfahren etabliert. Bei diesem Verfahren wird eine Probe von einem inerten Gas durchströmt. Dabei gehen flüchtige Komponenten aus der Probe in die Gasphase über. Diese Komponenten werden anschliessend an einem geeigneten Absorbermaterial oder in einer Kältefalle gesammelt. Im abschliessenden Austreibvorgang wird die Falle aufgeheizt, so dass die flüchtigen Komponenten in einen Gaschromatographen überführt werden können.

Die EP 0 590 932 A1 (Peters A.) offenbart ein Trap-System mit einer Trapsäule, insbesondere für die Chromatographie. Das System umfasst unter anderem eine Vakuumpumpe, welche über ein Ventil mit der Ausgangsöffnung der Trapsäule sowie mit der Eingangsöffnung einer Trennsäule verbunden ist, sowie eine Quelle für ein Trägergas. Durch Anschalten der Vakuumpumpe wird ein Analyt durch den entstehenden Unterdruck in die Trapsäule, welche als Kältefalle ausgestaltet ist, gezogen. Gleichzeitig wird die Trennsäule rückgespült. Anschliessend können durch Abtrennen der Vakuumpumpe vom System und dem Einströmen des Trägergases durch die Eingangsöffnung der Trapsäule und Erhitzen derselben die in der Kältefalle gesammelten Moleküle in die Trennsäule gespült und anschliessend einem GC zugeführt werden. Die Innenwandung der Trapsäule kann mit einem porösen Polymer beschichtet sein.

Die US 6,395,560 B1 (Merkelov M.) beschreibt eine Headspace-Vorrichtung, welche in einem purge and trap Verfahren eingesetzt werden kann. Der vom Headspace durch das Trägergas abgeführte Analyt kann in einer Falle aufkonzentriert werden. Trägergas und Analyt, welche in der Falle nicht zurückgehalten werden, können entweder in die Atmosphäre entlassen oder aufgefangen werden, beispielsweise in einer Heliumtrap.

Die US 6,365,107 B1 bezieht sich auf eine Headspace-Vorrichtung, bei welcher eine Störung des thermodynamischen Gleichgewichts im Probengefäss durch die Analytentnahme nicht unterbrochen wird. Hierzu weist die Vorrichtung zwei Kolbenspritzen auf, wobei über eine erste Kolbenspritze ein definiertes Volumen an Analyt entnommen und gleichzeitig mittels der zweiten Kolbenspritze dasselbe Volumen eines Inertgases in das Probengefäss eingespritzt wird.

Die US 8 092 744 B1 offenbart eine Vorrichtung zur Extraktion flüchtiger Komponenten aus einer Probe, umfassend ein Probengefäss zur Aufnahme der Probe und ein Fallenelement, welches mit dem Probengefäss fluidisch verbunden ist und welches über mindestens ein Absorbermaterial verfügt.

Die US 5 932 482 A offenbart eine Vorrichtung zur Extraktion flüchtiger Komponenten aus einer Probe, umfassend eine Probenentnahme-Vorrichtung mit einer Nadel.

Nachteilig an den bekannten Vorrichtungen ist, dass nach der Desorption der in der Falle aufkonzentrierten flüchtigen Komponenten diese über eine Transferleitung zu einem Analysegerät überführt werden. Wegen der Länge der Transferleitung werden die flüchtigen Komponenten erneut in einem Gasvolumen aufgenommen, womit die Fokussierung der aufkonzentrierten Analyten abnimmt, was in einer spektrographischen Analyse zu Signalverbreiterung oder sogar zu Signalverlust führen kann. Die Verwendung einer Transferleitung bedingt aufwändige Instandhaltungsmassnahmen, beispielsweise bei Undichtigkeit oder Verschmutzung, sowie einen höheren instrumentellen Aufwand, wie beispielsweise das Vorsehen einer separaten Heizung für die Transferleitung, spezielle Anschlüsse zum Einlass in ein Analysesystem, räumliche Nähe zu Analysesystem, etc.

### Darstellung der Erfindung

Aufgabe der Erfindung ist es, eine dem eingangs genannten technischen Gebiet zugehörende Vorrichtung zur Extraktion flüchtiger Komponenten aus einer Probe zu schaffen, welche die genannten Nachteile des Standes der Technik nicht aufweist.

Die Erfindung betrifft eine Vorrichtung zur Extraktion flüchtiger Komponenten aus einer Probe gemäß Anspruch 1, sowie ein Verfahren zur Extraktion von flüchtigen Komponenten aus einer Probe gemäß Anspruch 7.

Die Lösung der Aufgabe ist durch die Merkmale des Anspruchs 1 definiert. Gemäss der Erfindung umfasst die Vorrichtung ein Probengefäss zur Aufnahme der Probe, wobei das Probengefäss gasdicht verschlossen ist. Das Probengefäss weist eine Zuleitung sowie eine Ableitung auf. Der Vorrichtung ist ferner eine Gaszufuhr zugeordnet, welche mit der Zuleitung verbunden ist. Ein Fallenelement, welches mit der Ableitung fluidisch verbunden ist und welches über mindestens ein Absorbermaterial verfügt, ist lösbar mit der Ableitung verbunden. Das Fallenelement verfügt über einen Gasauslass, so dass bei Verbindung des Fallenelements mit der Ableitung dieses durch ein Gas aus der Gaszufuhr durchströmt werden kann.

Dadurch, dass das Fallenelement lösbar mit der Ableitung fluidisch verbunden ist, kann das Fallenelement von der Vorrichtung einfach gelöst und zu einem Analysegerät transferiert werden. Dadurch kann die Vorrichtung zur Extraktion räumlich getrennt vom Analysegerät vorliegen. Zudem ist keine Transferleitung nötig, da das Fallenelement direkt mit einer Einspritzöffnung eines Analysegeräts verbunden werden kann.

Das Fallenelement ist über eine einfach zu bedienende, lösbare Verbindung mit der Ableitung fluidisch verbunden. Im Allgemeinen wird in der vorliegenden Anmeldung unter "lösbare Verbindung" eine vorzugsweise werkzeugfreie und von Hand oder automatisch herzustellende und lösbare Verbindung zweier Fluidleitungen verstanden. Vorzugsweise verfügt das Fallenelement über mindestens ein Ventil oder wenigstens einen Verschluss, mit dem sich das in einem Innenraum des Fallenelements befindliche Absorbermaterial gasdicht von der umliegenden Atmosphäre abtrennen lässt. Vorzugsweise liegt die Probe als Feststoff oder als Flüssigkeit vor. Dabei bleibt im Probengefäss oberhalb der Probe ein Gasraum, der sogenannte Headspace, bestehen. Nach dem Einbringen der Probe in das Probengefäss, welches vorzugsweise aus Glas oder einem chemikalienbeständigen Polymer besteht, wird dieses gasdicht verschlossen, beispielsweise mit einem Stopfen, Deckel, Septum oder ähnlich.

Die Zuleitung und die Ableitung können am Probengefäss selbst, beispielsweise in der Form von Anschlussstutzen, welche mit den Fluidleitungen verbindbar sind, ausgebildet sein. Alternativ kann auch der Verschluss des Probengefässes über die Zu- und Ableitung verfügen oder mit diesen verbindbar sein. Ferner ist auch denkbar, dass die Zu- und Ableitung nach dem Verschliessen des Probengefässes in dieses gesteckt werden, zum Beispiel über geeignete Öffnungen. Wie ein Fachmann erkennt, muss der Anschluss der Zu- und Ableitung zum Probengefäss gegenüber der Atmosphäre gasdicht ausgebildet sein. Die Gaszufuhr ist vorzugsweise als Ventil ausgestaltet, welches mit mindestens einer Gasquelle, beispielsweise einer Gasflasche eines inerten Trägergases, wie beispielsweise Helium, Stickstoff, Kohlenstoffdioxid oder Argon verbunden ist. Über die Gaszufuhr kann ein Trägergas über die Zuleitung in das Probengefäss eingeleitet werden.

Die Ableitung ist über mindestens eine Fluidleitung mit dem Fallenelement verbunden. Die mindestens eine Fluidleitung kann in einer beliebigen Form vorliegen, beispielsweise als Schlauch, Kapillare, Glasröhre, etc.

Das Fallenelement verfügt über ein geeignetes Absorbermaterial, wie beispielsweise ein poröses Polymer auf der Basis von 2,6-diphenyl-p-phenylenoxid, welches unter dem Markennamen Tenax^{®} von der Firma Büchern BV vertrieben wird, oder Aktivkohle. Je nach Art der zu extrahierenden Stoffe kann ein geeignetes Absorbermaterial für die Falle verwendet werden. Alternativ kann als Falle auch eine Kältefalle verwendet werden, gegebenenfalls in Kombination mit einem Absorbermaterial.

Wird ein Trägergas von der Gaszufuhr über die Zuleitung in das Probengefäss geleitet, werden flüchtige Komponenten aus der Probe ausgetrieben. Insbesondere bevorzugt wird bei flüssigen Proben die Zuleitung derart im Probengefäss angeordnet, dass das Gas in einem unteren Bereich des Probengefässes in die Flüssigkeit eingeleitet wird und in der Folge durch dieses durchblubbert. Über die Ableitung gelangt das Gas mitsamt den ausgetriebenen flüchtigen Komponenten in das Fallenelement, wo die flüchtigen Komponenten durch das Absorbermaterial zurückbehalten werden.

Das Fallenelement ist derart ausgestaltet, dass das Gas durch das Absorbermaterial geleitet wird, bevor dieses den Gasauslass erreicht. Der Gasauslass verfügt vorzugsweise über ein schliessbares Ventil.

Das Fallenelement ist vorzugsweise als Säule ausgestaltet, welche über eine Einlassöffnung und über eine Auslassöffnung verfügt. Dabei sind die lösbare Verbindung an der Einlassöffnung und der Gasauslass an der Auslassöffnung der Säule angeordnet.

Das Fallenelement ist über einen Schnellverschluss mit der Ableitung verbunden.

Als "Schnellverschluss" im Sinne der vorliegenden Anmeldung werden Verschlusssysteme verstanden, welche ein werkzeugfreies und insbesondere einhändiges Herstellen und Lösen der Verbindung ermöglichen. Vorzugsweise wird als Schnellverschluss ein Bajonettverschluss, ein Spannring oder eine Druckkupplung verwendet. Alternativ kann die lösbare Verbindung auch über eine Schraubkupplung, Quetschverschraubung, Luer-Kupplung oder ähnlich realisiert sein.

Vorzugsweise verfügt das Fallenelement über eine Kanüle, welche über eine Zugangsöffnung lösbar mit der Ableitung verbunden ist, wobei die Kanüle insbesondere in die Zugangsöffnung gesteckt ist.

Dadurch lässt sich eine lösbare fluidische Verbindung des Fallenelements mit der Ableitung realisieren, welche in automatisierten Systemen, insbesondere mit gängigen Laborrobotern, einfach integrierbar ist. Die Zugangsöffnung ist insbesondere derart ausgestaltet, dass diese gasdicht verschlossen ist, wenn keine Kanüle eingesteckt ist. Beispielsweise kann die Zugangsöffnung über ein Septum verfügen, in welches die Kanüle gesteckt werden kann.

Vorzugsweise ist der Gasauslass fluidisch und lösbar mit der Zuleitung verbunden. Dadurch lässt sich ein geschlossener Gaskreislauf realisieren, wobei der Gasverbrauch erheblich reduziert werden kann. Zudem wird eine Kontamination der Umgebung durch Komponenten, welche im Fallenelement nicht zurückbehalten werden, vermieden. Im Falle eines geschlossenen Gaskreislaufs besteht darüber hinaus der Vorteil, dass keine Limitierung durch eine "breakthrough capacity" vorliegt, d. h. dass theoretisch ein unendliches Gasvolumen durch das Fallenelement geleitet werden kann, ohne dass die zu extrahierenden flüchtigen Substanzen aus dem Fallenelement austreten und verlorengehen.

Bei dieser Konfiguration der Vorrichtung wird zwischen Ableitung und Fallenelement vorzugsweise eine Pumpe angeordnet, um eine Umwälzung des Gases zu gewährleisten.

Die lösbare Verbindung zwischen dem Fallenelement und dem Einlass wird über einen Schnellverschluss hergestellt. Dadurch lässt sich die Verbindung des Fallenelements sowohl mit der Zu- als auch mit der Ableitung schnell lösen und herstellen. Bevorzugt ist zwischen dem Gasauslass und der Zuleitung mindestens eine Fluidleitung angeordnet, mit welcher der Gasauslass mit der Zuleitung verbunden ist.

Das Fallenelement ist als Spritze ausgestaltet, wobei das Absorbermaterial in einem Zylinder der Spritze angeordnet ist.

Eine derartige Ausgestaltung des Fallenelements ermöglicht einen sehr einfachen Transfer des Fallenelements von der Vorrichtung zu einem Analysegerät. Zudem kann bei der Desorption von im Fallenelement zurückgehaltenen flüchtigen Substanzen das in das Analysegerät eingespritzte Volumen sehr genau kontrolliert werden, beispielsweise über das Gesamtvolumen der eingesetzten Spritze oder über einen verfahrbar in der Spritze angeordneten Kolben.

Derartige Fallenelemente sind im Stand der Technik bekannt und werden von der Anmelderin CTC Analytics unter dem Namen ITEX vertrieben.

Vorzugsweise verfügt die Vorrichtung über ein Handhabungselement, mit dem das Fallenelement von der Ableitung zu einem Injektionsport eines Analysegeräts, insbesondere eines Gaschromatographen, bewegbar ist.

Bei einer derartigen Ausführungsform verfügt die Vorrichtung vorzugsweise über eine Vorrichtung, welche ein automatisches Lösen der Verbindung zwischen der Ableitung und wahlweise der Zuleitung und dem Fallenelement ermöglicht. Dadurch wird eine grösstmögliche Automatisierung der Vorrichtung ermöglicht.

Bevorzugt ist zwischen Ableitung und Fallenelement eine Wasserfalle angeordnet. Durch die Wasserfalle kann Wasser aus dem Gas entfernt werden, welches ansonsten bei einer anschliessenden Analyse der im Fallenelement zurückgehaltenen flüchtigen Komponenten in einem Gaschromatographen stören könnte. Als Wasserfalle werden insbesondere Molekularsiebe eingesetzt. Die Wasserfalle ist dabei vorzugsweise derart angeordnet, dass das gesamte Gas die Wasserfalle durchströmt, bevor dieses in das Fallenelement strömt. Das Fallenelement ist vorzugsweise lösbar in einer Halterung angeordnet, wobei die Halterung über eine Heiz- und/oder Kühlvorrichtung verfügt.

Eine Heizvorrichtung ermöglicht eine rasche und möglichst vollständige Desorption von im Fallenelement zurückgehaltenen flüchtigen Komponenten. Über eine Kühlvorrichtung kann die Temperatur des Fallenelements im Sinne einer Kühlfalle reduziert werden, um ein möglichst vollständiges Rückhalten der flüchtigen Komponenten im Fallenelement zu ermöglichen.

Die vorliegende Erfindung betrifft ferner ein Verfahren zur Extraktion von flüchtigen Komponenten aus einer Probe, insbesondere mit einer Vorrichtung gemäss Anspruch 1.

In einem ersten Schritt wird eine Probe in einem Probengefäss mit einer Zuleitung und einer Ableitung vorgelegt, wobei das Probengefäss anschliessend gasdicht verschlossen wird. In einem zweiten Schritt wird ein Gas durch die Zuleitung in das Probengefäss eingeleitet, wobei das Gas durch die Ableitung in ein mit dieser fluidisch und lösbar verbundenes Fallenelement geleitet wird und dieses durchströmt. Das Gas entweicht anschliessend durch einen Gasauslass aus dem Fallenelement. Nach einer gewissen Zeit wird die Einleitung des Gases unterbrochen. Anschliessend wird das Fallenelement von der Ableitung gelöst und zu einem Analysegerät überführt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer ersten Ausführungsform einer erfindungsgemässen Vorrichtung;
- Fig. 2: eine schematische Darstellung einer zweiten Ausführungsform, bei der der Gasauslass des Fallenelements mit der Zuleitung verbunden ist;
- Fig. 3: eine schematische Darstellung einer dritten Ausführungsform, bei der das Fallenelement als Spritze ausgebildet ist.

Grundsätzlich sind in den Figuren gleiche Teile mit gleichen Bezugszeichen versehen.

### Wege zur Ausführung der Erfindung

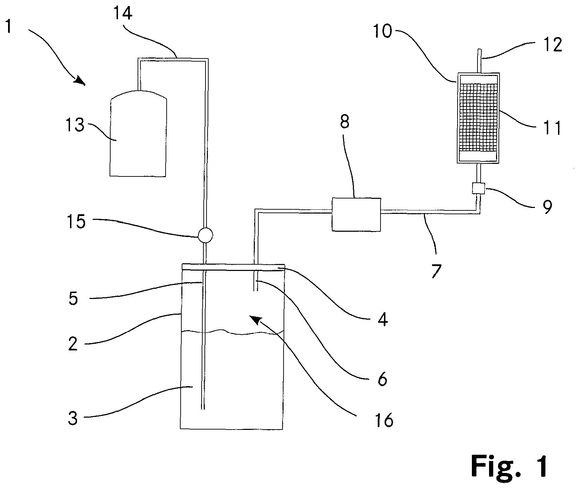

Die Fig. 1 zeigt eine schematische Darstellung einer ersten Ausführungsform einer erfindungsgemässen Vorrichtung 1 zur Extraktion flüchtiger Komponenten aus einer Probe, welche als Probeflüssigkeit 3 dargestellt ist. Die Probenflüssigkeit 3 liegt in einem Probengefäss 2 vor, welches über einen Verschluss 4, beispielsweise einen Deckel, gasdicht verschlossen ist. Eine Zuleitung 5 sowie eine Ableitung 6 ragen durch den Verschluss 4 in das Probengefäss 2 herein. Die Zuleitung 5 ist derart im Probengefäss 2 angeordnet, dass diese in die Probenflüssigkeit 3 ragt. Die Zuleitung 5 ist ferner über ein Gasventil 15 und eine Gasleitung 14 mit einer Gaszufuhr, welche als Gasflasche 13 dargestellt ist, verbunden. Durch Öffnen des Gasventils 15 kann Gas aus der Gasflasche 13 in das Probengefäss 2 eingeleitet werden. Beim gezeigten Ausführungsbeispiel wird das Gas durch die Probeflüssigkeit 3 durchblubbern und anschliessend in einem oberhalb der Probeflüssigkeit 3 frei gebliebenen Gasraum 16, dem sogenannten "headspace", austreten.

Die Ableitung 6 ist derart im Probengefäss 2 angeordnet, dass diese in diesen Gasraum 16 ragt, wobei das durch die Zuleitung 5 eingeleitete Gas durch die Ableitung 6 aus dem Probengefäss 2 ausströmt. Durch das Ausströmen von Gas aus dem Gasraum 16 kann sich kein Gleichgewicht zwischen den in der Probenflüssigkeit 3 und im Gasraum 16 befindlichen flüchtigen Komponenten einstellen, so dass diese nach und nach aus der Probenflüssigkeit 3 in den Gasraum 16 ausgetrieben werden, wobei die flüchtigen Komponenten anschliessend mit dem Gas durch die Ableitung 6 ausströmen. Das Durchblubbern des Gases durch die Probenflüssigkeit 3 erleichtert das Austreiben der flüchtigen Komponenten.

Die Ableitung 6 ist fluidisch und lösbar mit einem Fallenelement 10 verbunden. In der gezeigten Ausführungsform ist zwischen Ableitung 6 und Fallenelement 10 eine Fluidleitung 7 angeordnet. Die Fluidleitung 7 umfasst ferner eine Wasserfalle 10, in der mit dem Gas befindliches Wasser oder Feuchtigkeit zurückbehalten werden. Die lösbare Verbindung zwischen dem Fallenelement 10 und damit der Ableitung 6 sowie dem Fallenelement ist als Schnellverschluss 9 ausgestaltet, beispielsweise über einen Bajonettverschluss.

Das Fallenelement 10 umfasst ein Aborbermaterial 11 sowie einen Gasauslass 12. Zwischen der Gasflasche 13 und dem Gasauslass 12 kann somit ein Gasfluss sichergestellt werden, welcher flüchtige Komponenten aus der Probenflüssigkeit 3 austreibt und diese anschliessend über die Ableitung 6, die Fluidleitung 7 und die Wasserfalle 8 in das Fallenelement 10 mitreisst, wo diese im Absorbermaterial 11 zurückbehalten werden. Das Gas wird anschliessen aus dem Gasauslass 12 in die Atmosphäre entlassen oder alternativ zur Wiederverwertung in einem Gefäss (nicht gezeigt) gesammelt.

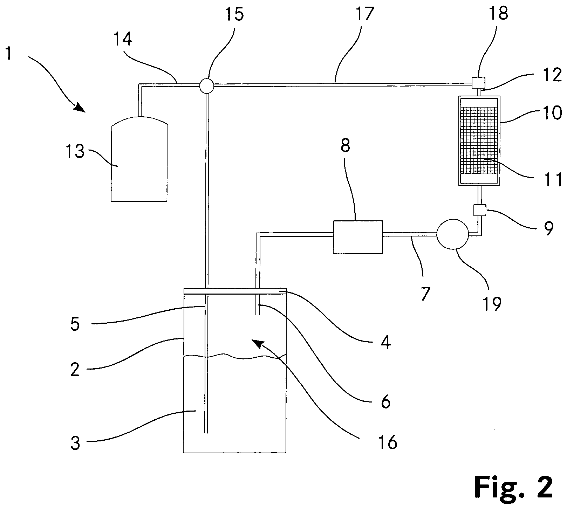

Die Fig. 2 zeigt eine zweite Ausführungsform einer erfindungsgemässen Vorrichtung 1 in einer schematischen Darstellung. Im Unterschied zur ersten Ausführungsform gemäss Fig. 1 ist der Gasauslass 12 über eine zweite Fluidleitung 17 und das Gasventil 15 mit der Zuleitung 5 fluidisch verbunden. Dadurch kann ein geschlossener Kreislauf des Gases realisiert werden. Der Gasauslass 12 des Fallenelements 10 ist über einen zweiten Schnellverschluss 18 lösbar mit der Zuleitung 5 verbunden. Durch die beiden Schnellverschlüsse 9, 18 lässt sich das Fallenelement somit schnell und einfach von der Vorrichtung 1 lösen, um z. B. zu einem Analysegerät transferiert zu werden. Um einen kontinuierlichen Gasfluss sicherzustellen, verfügt die Vorrichtung 1 bei dieser Ausführungsform zusätzlich über eine Pumpe 19.

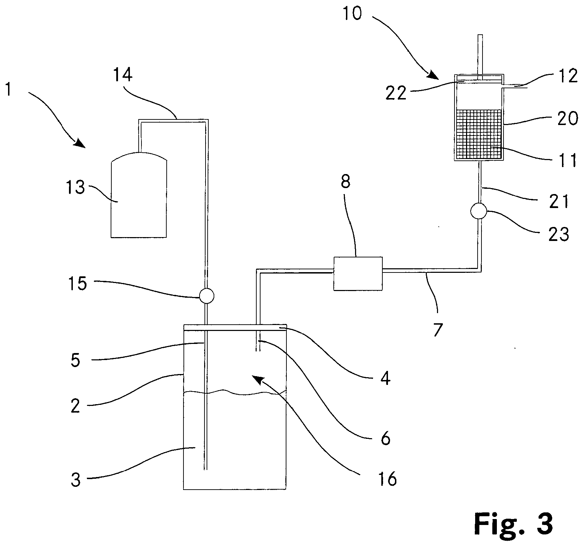

Die Fig. 3 stellt eine dritte Ausführungsform einer erfindungsgemässen Vorrichtung 1 dar. Bei dieser Ausführungsform ist das Fallenelement 10 als Spritze 20 ausgebildet, in deren Zylinder das Absorptionsmaterial 11 angeordnet ist. Die Spritze 20 verfügt über eine Kanüle 21, welche in eine Zugangsöffnung 23 gesteckt ist. Über die Kanüle 21 und die Zugangsöffnung 23 kann die Spritze 20 lösbar mit der Ableitung 6 verbunden werden. Die Zugangsöffnung 23 ist vorzugsweise als gasdichter Verschluss ausgestaltet, bevorzugt als Septum, in welchen die Kanüle 21 gesteckt werden kann. Die Zugangsöffnung 23 ist derart ausgebildet, dass diese gasdicht verschlossen ist, wenn die Kanüle 21 nicht mit dieser verbunden ist. Der Zylinder der Spritze 20 weist ferner einen Gasauslass 12 auf. In der Spritze ist ferner ein Kolben angeordnet, mit dem nach dem Trennen der Verbindung zur Ableitung 6 und dem Transfer der Spritze 20 zu einem Analysegerät und der Desorption der flüchtigen Komponenten aus dem Absorbermaterial 11 ein definiertes Volumen in das Analysegerät eingespritzt werden kann.

## Patentansprüche

1. Vorrichtung zur Extraktion flüchtiger Komponenten aus einer Probe, umfassend:
a) ein Probengefäss (2) zur Aufnahme der Probe (3) mit einer Zuleitung (5) und mit einer Ableitung (6), wobei das Probengefäss (2) gasdicht verschlossen ist;
b) eine Gaszufuhr (13), welche mit der Zuleitung (5) verbunden ist;
c) ein Fallenelement (10), welches mit der Ableitung (6) fluidisch verbunden ist und welches über mindestens ein Absorbermaterial (11) verfügt,
wobei
das Fallenelement (10) über eine werkzeugfrei und von Hand oder automatisch herzustellende und lösbare Verbindung mittels eines Schnellverschlusses (9) mit der Ableitung (6) verbunden ist und das Fallenelement (10) über einen Gasauslass (12) verfügt, so dass bei Verbindung des Fallenelements (10) mit der Ableitung (6) dieses durch ein Gas aus der Gaszufuhr (13) durchströmt werden kann,
**dadurch gekennzeichnet, dass** das Fallenelement (10) als Spritze (20) ausgestaltet ist, wobei das Absorbermaterial (11) in einem Zylinder der Spritze (20) angeordnet ist.

2. Vorrichtung gemäss Anspruch 1, **dadurch gekennzeichnet, dass** das Fallenelement (10) über eine Kanüle (21) verfügt, welche über eine Zugangsöffnung (23) lösbar mit der Ableitung (6) verbunden ist, wobei die Kanüle (21) insbesondere in die Zugangsöffnung (23) gesteckt ist.

3. Vorrichtung gemäss einem der Ansprüche 1 oder 2, **dadurch gekennzeichnet, dass** der Gasauslass (12) fluidisch und lösbar mit der Zuleitung (5) verbunden ist, insbesondere über einen zweiten Schnellverschluss (18).

4. Vorrichtung gemäss einem der Ansprüche 1 bis 3, **dadurch gekennzeichnet, dass** die Vorrichtung (1) über ein Handhabungselement verfügt, mit dem das Fallenelement (10) von der Ableitung (6) zu einem Injektionsport eines Analysegeräts, insbesondere eines Gaschromatographen, bewegbar ist.

5. Vorrichtung gemäss einem der Ansprüche 1 bis 4, **dadurch gekennzeichnet, dass** zwischen Ableitung (6) und Fallenelement (10) eine Wasserfalle (8) angeordnet ist.

6. Vorrichtung gemäss einem der Ansprüche 1 bis 5, **dadurch gekennzeichnet, dass** das Fallenelement (10) lösbar in einer Halterung angeordnet ist, wobei die Halterung über eine Heiz- und/oder Kühlvorrichtung verfügt.

7. Verfahren zur Extraktion von flüchtigen Komponenten aus einer Probe mit einer Vorrichtung (1) gemäss einem der Ansprüche 1 bis 6, umfassend die Schritte:
a) Vorlegen der Probe (3) in einem Probengefäss (2) mit einer Zuleitung (5) und einer Ableitung (6), wobei das Probengefäss (2) anschliessend gasdicht verschlossen wird;
b) Einleiten eines Gases aus einer Gaszufuhr (13) durch die Zuleitung (5) in das Probengefäss (2), wobei das Gas durch die Ableitung (6) in ein mit dieser fluidisch und lösbar verbundenes Fallenelement (10) geleitet wird und dieses durchströmt, und wobei das Gas anschliessend durch einen Gasauslass (12) aus dem Fallenelement (10) entweicht;
**dadurch gekennzeichnet, dass**
die Einleitung des Gases nach einer vorbestimmten Zeit unterbrochen, das Fallenelement (10) von der Ableitung (6) gelöst und zu einem Analysegerät überführt wird.

## Claims

1. A device for extracting volatile compounds from a sample, comprising:
a) a sample vessel (2) for receiving the sample (3) with a supply line (5) and with a discharge line (6), the sample vessel (2) being sealed in a gas-tight manner;
b) a gas supply (13), which is connected to the supply line (5);
c) a trap element (10) which is fluidically connected to the discharge line (6) and which comprises at least one absorber material (11),
wherein
the trap element (10) is connected to the discharge line (6) via a connection that can be established and released manually or automatically without tools by means of a quick-release fastener (9), and the trap element (10) has a gas outlet (12) so that when the trap element (10) is connected to the discharge line (6), a gas from the gas supply (13) can flow through it,
**characterised in that** the trap element (10) is designed as a syringe (20), the absorber material (11) being arranged in a cylinder of the syringe (20).

2. Device according to claim 1, **characterised in that** the trap element (10) comprises a cannula (21) which is detachably connected to the discharge line (6) via an access opening (23), the cannula (21) being preferably inserted into the access opening (23).

3. Device according to claim 1 or claim 2, **characterised in that** the gas outlet (12) is fluidically and detachably connected to the supply line (5), in particular via a second quick-release fastener (18).

4. Device according to any of claims 1 to 3, **characterised in that** the device (1) comprises a handling element with which the trap element (10) can be moved from the discharge line (6) to an injection port of an analyser, in particular a gas chromatograph.

5. Device according to any of claims 1 to 4, **characterised in that** a water trap (8) is arranged between the discharge line (6) and the trap element (10).

6. Device according to any of claims 1 to 5, **characterised in that** the trap element (10) is detachably arranged in a holder, wherein the holder comprises a heating and/or cooling device.

7. A method for extracting volatile compounds from a sample with a device (1) according to any of claims 1 to 6, comprising the steps of:
a) Providing the sample (3) in a sample vessel (2) with a supply line (5) and a discharge line (6), wherein the sample vessel (2) is subsequently sealed in a gas-tight manner;
b) Introduction of a gas from a gas supply (13) through the supply line (5) into the sample vessel (2), wherein the gas is passed through the discharge line (6) into a trap element (10) fluidically and detachably connected thereto and flows through the latter, and wherein the gas subsequently escapes from the trap element (10) through a gas outlet (12);
**characterised in that**
the introduction of the gas is interrupted after a predetermined time, the trap element (10) is detached from the discharge line (6) and transferred to an analyser.

## Revendications

1. Dispositif pour l'extraction de composants volatils d'un échantillon, comprenant :
a) un récipient à échantillon (2) destiné à recevoir l'échantillon (3) avec un conduit d'arrivée (5) et avec un conduit d'évacuation (6), sachant que le récipient à échantillon (2) est fermé de façon étanche au gaz,
b) une alimentation en gaz (13), laquelle est reliée au conduit d'arrivée (5),
c) un élément de piégeage (10), lequel est relié du point de vue fluide au conduit d'évacuation (6) et lequel dispose d'au moins un matériau absorbant (11),
sachant que
l'élément de piégeage (10) est relié au moyen d'une fermeture rapide (9) au conduit d'évacuation (6) par le biais d'une liaison sans outil et à la main ou à établir automatiquement et de façon amovible et l'élément de piégeage (10) dispose d'une sortie de gaz (12) de telle manière que lors de la liaison de l'élément de piégeage (10) avec le conduit d'évacuation (6), celui-ci peut être traversé par un gaz venant de l'alimentation en gaz (13),
***caractérisé en ce que*** l'élément de piégeage (10) est constitué sous la forme d'un système d'injection (20), sachant que le matériau absorbant (11) est disposé dans un cylindre du système d'injection (20).

2. Dispositif selon la revendication 1, **caractérisé *en ce que*** l'élément de piégeage (10) dispose d'une canule (21), laquelle est reliée de façon amovible au conduit d'évacuation (6) par une ouverture d'accès (23), sachant que la canule (21) est emboîtée en particulier dans l'ouverture d'accès (23).

3. Dispositif selon l'une quelconque de revendications 1 ou 2, ***caractérisé en ce que*** la sortie de gaz (12) est relié du point de vue fluide et de façon amovible au conduit d'arrivée (5), en particulier par le biais d'une deuxième fermeture rapide (18).

4. Dispositif selon l'une quelconque des revendications 1 à 3, ***caractérisé en ce que*** le dispositif (1) dispose d'un élément de manipulation avec lequel l'élément de piégeage (10) peut être déplacé du conduit d'évacuation (6) vers un orifice d'injection d'un appareil d'analyse, en particulier d'un chromatographe en phase gazeuse.

5. Dispositif selon l'une quelconque des revendications 1 à 4, ***caractérisé en* ce *qu'***un piège à eau (8) est disposé entre le conduit d'évacuation (6) et l'élément de piégeage (10).

6. Dispositif selon l'une quelconque des revendications 1 à 5, ***caractérisé en ce que*** l'élément de piégeage (10) est disposé de façon amovible dans un système de fixation, sachant que le système de fixation dispose d'un dispositif de chauffage et/ou de refroidissement.

7. Procédé pour l'extraction de composants volatils d'un échantillon avec un dispositif (1) selon l'une quelconque des revendications 1 à 6, comprenant les étapes de :
a) dépose de l'échantillon (3) dans un récipient à échantillon (2) avec un conduit d'arrivée (5) et un conduit d'évacuation (6), sachant que le récipient à échantillon (2) est ensuite fermé étanche au gaz,
b) introduction d'un gaz venant d'une alimentation en gaz (13) par le conduit d'arrivée (5) dans le récipient à échantillon (2), sachant que le gaz est dirigé à travers le conduit d'évacuation dans un élément de piégeage (10) relié du point de vue fluide et de façon amovible à celui-ci et traverse celui-ci et sachant que le gaz s'échappe ensuite de l'élément de piégeage (10) par une sortie de gaz (12),
***caractérisé en ce que***
l'introduction du gaz est interrompue au bout d'un temps prédéterminé, l'élément de piégeage (10) est séparé du conduit d'évacuation (6) et est transféré vers un appareil d'analyse.
